# EUROPÄISCHE PATENTSCHRIFT

(11) **EP 3 726 280 B1**
(45) Veröffentlichungstag und Bekanntmachung des Hinweises auf die Patenterteilung: **02.03.2022**
(21) Anmeldenummer: 20168154.1
(22) Anmeldetag: 06.04.2020
(51) Int. Cl.: G02C 1/08, G02C 5/22

(54) **BRILLENGESTELL MIT KLAMMER-SCHARNIERELEMENTEN UND AUSTAUSCHBAREN BRILLENBÜGELN**
SPECTACLE FRAME WITH CLIP HINGE ELEMENTS AND INTERCHANGEABLE TEMPLES
MONTURE DE LUNETTES AVEC ÉLÉMENTS DE CHARNIÈRE À CLIP ET BRANCHES INTERCHANGEABLES

(30) Priorität: 16.04.2019 DE 102019002803
(43) Veröffentlichungstag der Anmeldung: 21.10.2020
(73) Patentinhaber: Finger, Kai, 33100 Paderborn (DE)
(72) Erfinder: Finger, Kai, 33100 Paderborn (DE)
(74) Vertreter: Horak, Michael

(56) Entgegenhaltungen:
- WO-A1-2013/100253
- WO-A1-2015/185831
- DE-U1-202004 007 224
- DE-U1-202012 006 528
- DE-U1-202012 104 359
- KR-Y1- 200 443 382
- US-A1- 2007 291 221

## Beschreibung

Die vorliegende Erfindung betrifft ein Brillengestell mit Klammer-Scharnierelementen und austauschbaren Brillenbügeln.

Handelsübliche Brillengestelle bestehen üblicherweise aus einer Gläserfassung mit seitlich angeordneten Brillenbügeln, die durch das Zusammenführen und Verschrauben von bügel- und fassungsseitig integrierten Scharnierelementen schwenkbar angebunden werden. Ein aus ästhetischen oder funktionalen Gründen gewünschtes Austauschen der Brillenbügel ist dabei nicht vorgesehen, da hierzu zunächst die filigran ausgebildeten Scharnierstifte respektive Scharnierschrauben gelöst werden müssen.

Eine mögliche Lösung ist beispielsweise der EP 0 863 424 A1 zu entnehmen. Das darin beschriebene Brillengestell ermöglicht eine schraubenlose Anbindung der Brillenbügel durch fassungsseitig vorgesehene Anschlusselemente, die jeweils eine obere und eine untere Aussparung zur Aufnahme der Brillenbügel aufweisen, wobei die Brillenbügel zunächst zwei Blattfedern aufweisen, die partiell an einem dem Träger zugewandten Abschnitt des fassungsseitigen Anschlusselements anliegen, und überdies eine weitere Blattfeder, die an einem vom Träger abgewandten Abschnitt anliegt und den Brillenbügel unter Bildung einer Klemmwirkung stabilisiert, wobei die an dem dem Träger zugewandten Abschnitt anliegenden Blattfedern eine Biegung aufweisen, die beim Ein- und Ausklappen durch die Aussparungen des fassungsseitigen Anschlusselements geführt werden, während die stabilisierende Blattfeder entlang des vom Träger abgewandten Abschnitts des Anschlusselements gleitet. Ein wesentlicher Vorteil einer derartigen Verbindungsanordnung besteht darin, dass die fassungsseitigen Anschlusselemente und die Brillenbügel weitgehend aus Flachmaterial hergestellt werden können, wobei die konstruktionsbedingte Bauweise zugleich den Nachteil hat, dass sich die Brillenbügel unter mechanischer Beanspruchung leicht lösen, beispielsweise durch ungewolltes Spreizen der Blattfedern oder vertikales Abknicken des Brillenbügels. Eine Stabilität, wie sie etwa ein handelsüblicher Gelenkmechanismus mit einem Scharnierstift bietet, lässt sich durch die hier vorliegende Verbindungsanordnung kaum erreichen. Darüber hinaus weist die resultierende Gläserfassung seitlich angeordnete Schlitze auf, die das horizontale respektive vertikale Öffnen der Gläserfassung und demgemäß das Austauschen der Brillengläser ermöglichen, wobei das Austauschen der Brillengläser zunächst das Lösen filigran ausgebildeter Schließspangen erfordert.

Analog dazu ermöglichen auch die in der WO 2005/109081 A2 und DE 20 2012 104 359 U1 beschriebenen Brillengestelle eine schraubenlose Anbindung der Brillenbügel, wobei die Brillenbügel fassungsseitig jeweils mindestens eine Federzunge aufweisen, die den Brillenbügel unter Ausbildung einer Klemmwirkung stabilisiert, und überdies jeweils mindestens einen mindestens teilzylinderförmig ausgebildeten Abschnitt, durch welchen der Brillenbügel schwenkbar in einen korrespondierenden teilzylinderförmig respektive zylinderförmig ausgebildeten Abschnitt des fassungsseitig vorgesehenen Anschlusselements greift, wobei das in DE 20 2012 104 359 U1 beschriebene Brillengestell seitlich angeordnete Anschlusselemente vorsieht, die in dafür vorgesehene und entsprechend ausgebildete Verbindungsabschnitte der Gläserfassung greifen; und wobei die Gläserfassung in jeweils mindestens einer erfindungsgemäßen Ausführung seitlich angeordnete Schlitze aufweist, die durch filigran ausgebildete Bauteile fixiert werden; wobei das Austauschen der Brillengläser auch hier das Lösen filigran ausgebildeter Bauteile erfordert.

Ein Brillengestell mit fassungsseitig vorgesehenen Anschlusselementen, die eine schraubenlose Anbindung der weitgehend aus Flachmaterial herstellbaren Brillenbügel ermöglichen, ist ferner bekannt aus der DE 20 2012 006 528 U1, wobei die Anschlusselemente ausgeführt als Schließelement sind, welche an den terminalen Enden rechts und links in die Gläserfassung greifen, derart, dass ein ungewolltes Öffnen der geschlitzten Gläserfassung verhindert wird, und welche überdies Öffnungen zur Aufnahme der Brillenbügel aufweisen, wobei die Brillenbügel an ihren fassungsseitigen Enden drei Streifen aufweisen, von denen einer mit zylinderförmig ausgebildeten Zapfen zur Aufnahme durch die Öffnungen der Schließelemente versehen ist, während die übrigen Streifen als Blattfedern dienen, welche den Brillenbügel unter Ausbildung einer Klemmwirkung respektive Vorspannung stabilisieren, wobei der die Zapfen aufweisende Streifen durch eine S-förmige oder stufenförmige Biegung relativ zu den übrigen Streifen nach innen versetzt ist. Ein Nachteil ergibt sich daraus, dass das Abnehmen des Brillenbügels in mindestens einer konstruktionsbedingten Ausführung ein ungewolltes Lösen der besagten Schließelemente begünstigt.

Neben den bereits erläuterten Nachteilen haben die vorgenannten Ansätze ferner den Nachteil, dass die konstruktionsbedingte Bauweise ein wiederholtes und unter ästhetischen Gesichtspunkten wünschenswertes Austauschen der Brillenbügel erschwert, da die die Biegung aufweisenden Abschnitte des Brillenbügels und die die Klemmwirkung induzierenden Blattfedern respektive Federzungen beim Anbringen und Abnehmen der Brillenbügel an einander gegenüberliegenden Abschnitten der fassungsseitig vorgesehenen Anschlusselemente vorbeigeführt werden müssen.

Alternative Ansätze, die eine Verbindungsanordnung mit austauschbaren Brillenbügeln und jeweils einem aus einem Flachmaterial herausgebildeten fassungs- und bügelseitigen Anschlusselement rechts und links vorsehen, resultieren beispielsweise aus den Schriften WO 2013/100253 A1 und US 2007 / 0 291 221 A1 wobei die fassungsseitigen Anschlusselemente von jeweils mindestens zwei fassungsseitig vorgesehenen Schlitzen respektive Aufnahmelöchern aufgenommen werden, und wobei die fassungsseitigen Anschlusselemente mindestens zwei geschlitzte Aussparungen respektive Ösen aufweisen, die eine schwenkbare Anbindung der Brillenbügel ermöglichen, wobei die Brillenbügel durch zapfenartig ausgebildete Abschnitte von den Aussparungen respektive Ösen aufgenommen werden. In der WO 2013/100253 A1 ist ferner ein klammerartig ausgebildetes Element beschrieben, welches derart zwischen dem Brillenbügel und der Fassungsinnenseite positioniert ist, dass dieses beim Ein- / Ausklappen des Brillenbügels gestaucht wird, derart, dass der Brillenbügel durch die induzierte Spannwirkung stabilisiert wird. Da jener Abschnitt der Anschlusselemente, der von den Schlitzen der Gläserfassung aufgenommen wird, gleichzeitig ausgebildet ist zur Anbindung des Brillenbügels, bedingt der Brillenbügel zugleich den Halt der Anschlusselemente in den Schlitzen. Eine derartige Verbindungsanordnung hat daher den Nachteil, dass sich die filigranen Anschlusselemente und die klammerartigen Elemente nach dem Abnehmen der Brillenbügel ungewollt lösen können, sodass ein wiederholtes und aus ästhetischen Gründen gewünschtes Austauschen der Brillenbügel und Brillengläser erschwert wird. Darüber hinaus begünstigen die geschlitzten Aussparungen respektive Ösen, dass sich die Brillenbügel in einer geschlossenen Position der Brillenbügel ungewollt von dem Anschlusselement lösen.

Bekannt ist ferner ein Brillengestell mit einer Verbindungsanordnung, welche gemäß der DE 10 2016 000 085 A1 fassungsseitig vorgesehene Anschlusselemente aufweist, hier Achse genannt, die eine im Wesentlichen zylindrische Kontaktfläche zur Anbindung der Brillenbügel aufweisen, und Brillenbügel, welche je eine Achse schwenkbar umgreifen, wobei sich das bügelseitige Anschlusselement im Wesentlichen aus den Bügelenden herausbilden lässt, und wobei die Achse durch Eingreifen der Gläserfassung in die Achse und/oder ein in mindestens einer offenbarten Ausführung zum Einsatz kommendes Sicherungselement, beispielsweise ein Zylinderstift, und anschließendes Umgreifen der Achse durch den Brillenbügel in der eingesetzten Position gehalten wird. Auch hierbei kann das Abnehmen des Brillenbügels demnach ein ungewolltes Lösen der filigranen Achse und/oder des Sicherungselements begünstigen.

Weiters sind ähnliche Verbindungsanordnungen bekannt aus der KR 200 443 382 und der WO 2015/185831 A1.

Ausgehend davon ist es Aufgabe der vorliegenden Erfindung, ein leicht herstellbares Brillengestell zu schaffen, welches zunächst dahingehend verbessert ist, dass die Gläserfassung mit fassungsseitigen Scharnierelementen versehen ist, welche einen Scharnierstift zur Anbindung der Brillenbügel aufweisen; und welches ferner dahingehend verbessert ist, dass sich die Brillenbügel mühelos austauschen lassen, wobei überdies gewährleistet sein soll, dass sich die Brillenbügel anbringen und stabilisieren lassen, ohne eine Blattfeder oder Federzunge auszubilden, die beim Ein- / Ausklappen frei entlang eines vom Träger abgewandten Abschnitts des Scharnierelements gleitet; und wobei ferner gewährleistet sein soll, dass sich die fassungsseitigen Scharnierelemente mit der Gläserfassung verbinden lassen, ohne diese Einpressen oder aber einteilig aus der Gläserfassung herausbilden zu müssen; und ohne ein ungewolltes Lösen der Scharnierelemente nach dem Abnehmen der Brillenbügel zu begünstigen.

Gelöst wird diese Aufgabe durch ein Brillengestell nach Anspruch 1.

In einem ersten Aspekt schlägt die Erfindung eine Gläserfassung zur Aufnahme von Brillengläsern vor, die mit zwei Klammer-Scharnierelementen mit jeweils einer U-förmig aus einem Flachmaterial herausgebildeten Befestigungsklammer und zwei einteilig aus der Befestigungsklammer herausgebildeten Scharnieraugen mit einem von den Scharnieraugen aufgenommenen Scharnierstift versehen ist, wobei die Scharnieraugen jeweils eine zur Aufnahme des Scharnierstiftes ausgebildete Aussparung aufweisen, und wobei die Scharnieraugen einander gegenüberliegend angewinkelt aus einem ersten Schenkel der Befestigungsklammer herausgebildet sind, wobei die Scharnieraugen zu dem gegenüberliegenden Schenkel der Befestigungsklammer weisen, und wobei die Befestigungsklammer mit dem die Scharnieraugen aufweisenden Schenkel und dem gegenüberliegenden Schenkel außenrandseitig an der Fassungsfront und der Fassungsinnenseite anliegend in die Gläserfassung greift, wobei der die Scharnieraugen aufweisende Schenkel der Befestigungsklammer an der Fassungsfront anliegt, und wobei die Gläserfassung an ihren terminalen Enden rechts und links jeweils zwei untereinander angeordnete Schlitze zur Aufnahme jeweils eines Klammer-Scharnierelements aufweist, derart, dass die Scharnieraugen ausgehend von dem an der Fassungsfront anliegenden Schenkel durch die Schlitze geführt werden. Die Befestigungsklammer und die Scharnieraugen wirken dabei derart komplementär, dass die Scharnieraugen durch den an der Fassungsinnenseite anliegenden Schenkel nicht aus den Schlitzen der Gläserfassung weichen, wobei die Befestigungsklammer vorzugsweise federnd ausgebildet ist, um ein Verformen der Befestigungsklammer zu erschweren.

Die erfindungsgemäßen Brillenbügel weisen fassungsseitig jeweils drei in Längsrichtung der Brillenbügel weisende Streifen auf, die derart ausgebildet sind, dass der mittig angeordnete Streifen einen an dem fassungsseitigen Ende des Streifens angewinkelten U-förmig ausgebildeten Bügel aufweist und die beiden äußeren Streifen jeweils einen an dem fassungsseitigen Ende der Streifen U-förmig ausgebildeten Haken, wobei sich die an den fassungsseitigen Enden der Streifen ausgebildeten Haken in einer angebrachten und geöffneten Position des Brillenbügels U-förmig vom Träger weg erstrecken, und wobei die ausgebildeten Bügel jeweils eine in Längsrichtung des Brillenbügels weisende Öffnung aufweisen, durch welche der Scharnierstift in den Haken geführt werden kann, wobei die Brillenbügel durch die U-förmige Ausbildung der Haken schwenkbar anliegend in den Scharnierstift greifen, und wobei die Haken durch eine stufenförmige oder S-förmige Ausbildung der die Haken ausbildenden Streifen derart zu dem U-förmig ausgebildeten Bügel hin versetzt sind, dass der U-förmig ausgebildete Bügel an einem Abschnitt des in den Haken geführten Scharnierstiftes anliegt, derart, dass dieser in einer angebrachten Position des Brillenbügels nicht aus der Öffnung der Haken weicht, wobei der Bügel derart ausgebildet ist, dass mindestens ein Abschnitt eines zur Fassungsinnenseite gewandten Abschnitts des Bügels in einer angebrachten und geöffneten Position des Brillenbügels flächig an dem an der Fassungsinnenseite anliegenden Schenkel der Befestigungsklammer anliegt, und wobei die den Bügel und die Haken ausbildenden Streifen aus einem Flachmaterial herausgebildet sind, wobei diese vorzugsweise federnd ausgebildet sind. In einer bevorzugten Ausführung ist der Bügel derart ausgebildet, dass der angewinkelt aus dem Streifen hervorgehende Abschnitt und der zur Fassungsinnenseite gewandte Abschnitt des Bügels relativ zu dem Durchmesser des den Bügel führenden Abschnitts des Scharnierstiftes verlängert ausgebildet sind, derart, dass der U-förmig ausgebildete Bügel einen Führungsabschnitt aufweist, innerhalb dessen der Bügel beweglich an dem den Bügel führenden Abschnitt des Scharnierstiftes anliegt. Im Vergleich zum Stand der Technik haben die konstruktionsbedingte Bauweise des Brillenbügels und die damit einhergehende komplementäre Anordnung der Haken und Bügel daher den Vorteil, dass diese aus einem Flachmaterial herausgebildet werden können und eine Verbindungsanordnung schaffen, die ein müheloses Anbringen und Abnehmen des Brillenbügels bei einer gleichzeitig signifikant höheren Stabilität des Brillenbügels ermöglicht, wobei das Anbringen und Abnehmen des Brillenbügels beispielsweise dadurch erfolgen kann, dass die den Bügel und die Haken aufweisenden Streifen zwischen Daumen und Zeigefinger gehalten und durch leichtes Einwirken gegeneinander geführt werden. Auf diese Weise lässt sich der Scharnierstift durch einen einfachen Handgriff an dem Bügel vorbei aus den Haken führen.

Eine vorteilhafte Ausgestaltung des erfindungsgemäßen Brillengestells resultiert unterdessen aus den Patentansprüchen 9 und 10. Die gemäß der Erfindung ausgebildete Befestigungsklammer liegt dabei derart an einem Brillenglas an, dass ein ungewolltes Weichen des Brillenglases aus der eingesetzten Position verhindert wird, wobei die Gläserfassung gemäß einer vorteilhaften Weiterentwicklung an ihren terminalen Enden rechts und links ferner jeweils eine ergänzende Aussparung zur Aufnahme eines vorspringenden Abschnitts eines einen vorspringenden Abschnitt aufweisenden Brillenglases aufweist, wobei sich die Aussparung jeweils ausgehend von einer Öffnung zur Aufnahme des Brillenglases partiell über das an die Öffnung anschließende terminale Ende der Gläserfassung erstreckt, und wobei der vorspringende Abschnitt des Brillenglases dabei von mindestens einem Abschnitt der Befestigungsklammer in der Aussparung gehalten wird, wobei sich das Brillenglas durch das Öffnen der Befestigungs-klammer oder aber durch horizontales Lösen der Befestigungsklammer von der Aussprung und demgemäß von der Gläserfassung trennen lässt.

Darüber hinaus schlägt die Erfindung vor, dass die Gläserfassung mit zwei an den terminalen Enden rechts und links angeordneten Schlitzen versehen sein kann, die sich ausgehend von jeweils einer Öffnung zur Aufnahme eines Brillenglases stufenförmig durch die Schlitze zur Aufnahme der Scharnieraugen verlaufend über die terminalen Enden der Gläserfassung erstrecken, derart, dass die Gläserfassung in einen oberen und einen unteren Rahmenabschnitt unterteilt wird, an welchen jeweils einer der Schlitze zur Aufnahme der Scharnieraugen angeordnet ist.

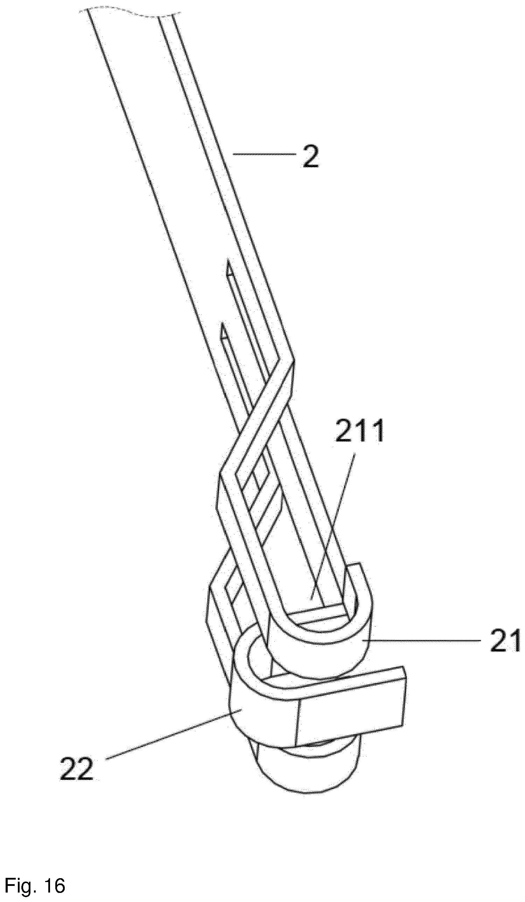

Weitere konstruktionsbedingte Attribute und Vorteile ergeben sich aus den Erläuterungen der Figuren 1 bis 16.

### Kurzbeschreibung der Figuren

Fig. 1: Schematische Darstellung einer bevorzugten Ausführungsform eines erfindungsgemäßen Brillengestells. Perspektivische Ansicht mit einer Gläserfassung, zwei fassungsseitigen Klammer-Scharnierelementen und zwei angebrachten Brillenbügeln.
Fig. 2: Schematische Darstellung eines vergrößerten Ausschnitts der Fassungsinnenseite der Gläserfassung einer bevorzugten Ausführungsform mit einem Klammer-Scharnierelement.
Fig. 3: Schematische Darstellung eines vergrößerten Ausschnitts der Fassungsinnenseite der Gläserfassung einer bevorzugten Ausführungsform mit einem Klammer-Scharnierelement und einem angebrachten Brillenbügel in einer ausgeklappten Position.
Fig. 4: Schematische Darstellung einer Schnittansicht der Gläserfassung einer bevorzugten Ausführungsform mit einem Klammer-Scharnierelement und einem angebrachten Brillenbügel in einer ausgeklappten Position.
Fig. 5: Schematische Darstellung einer Schnittansicht der Gläserfassung einer bevorzugten Ausführungsform mit einem Klammer-Scharnierelement und einem angebrachten Brillenbügel in einer zum Ein- / Ausklappen angelegten Position.
Fig. 6: Schematische Darstellung einer Schnittansicht der Gläserfassung einer bevorzugten Ausführungsform mit einem Klammer-Scharnierelement und einem angebrachten Brillenbügel in einer eine Federwirkung induzierenden (vom Träger abgewandten) Position.
Fig. 7: Schematische Darstellung einer Schnittansicht der Gläserfassung einer bevorzugten Ausführungsform mit einem Klammer-Scharnierelement und einem Brillenbügel in einer zum Anbringen angelegten Position.
Fig. 8: Schematische Darstellung einer Schnittansicht der Gläserfassung einer bevorzugten Ausführungsform mit einem Klammer-Scharnierelement mit einer zur Gläserfassung gewandten Biegung und einem angebrachten Brillenbügel.
Fig.9: Schematische Darstellung eines vergrößerten Ausschnitts der Fassungsfront der Gläserfassung einer bevorzugten Ausführungsform mit einer vom inneren Fassungsrand ausgehenden Aussparung und einem Brillenglas in einer eingesetzten Position.
Fig. 10: Schematische Darstellung eines vergrößerten Ausschnitts der Fassungsfront der Gläserfassung einer bevorzugten Ausführungsform mit einer vom inneren Fassungsrand ausgehenden Aussparung und einem von der Aussparung gelösten Brillenglas.
Fig. 11: Schematische Darstellung eines vergrößerten Ausschnitts der Fassungsfront der Gläserfassung einer bevorzugten Ausführungsform mit einem vom inneren Fassungsrand ausgehenden Schlitz.
Fig. 12: Schematische Darstellung eines vergrößerten Ausschnitts der Fassungsfront der Gläserfassung einer bevorzugten Ausführungsform mit einem vom inneren Fassungsrand ausgehenden Schlitz und einem Klammer-Scharnierelement.
Fig. 13: Schematische Darstellung eines vergrößerten Ausschnitts der Fassungsfront der Gläserfassung einer bevorzugten Ausführungsform, bei welcher der vom inneren Fassungsrand ausgehende Schlitz geöffnet ist.
Fig. 14: Perspektivische Ansicht einer schematischen Darstellung einer bevorzugten Ausführungsform eines erfindungsgemäßen Klammer-Scharnierelements mit zungenförmig ausgebildeten Scharnieraugen
Fig. 15: Perspektivische Ansicht einer schematischen Darstellung einer bevorzugten Ausführungsform eines erfindungsgemäßen Klammer-Scharnierelements mit Scharnieraugen mit in Längsrichtung der Befestigungsklammer weisenden vorspringenden Abschnitten.
Fig. 16: Schematische Darstellung eines vergrößerten Ausschnitts des auf die Gläserfassung einer bevorzugten Ausführungsform zulaufenden Abschnitts des Brillenbügels.

### Detaillierte Beschreibung

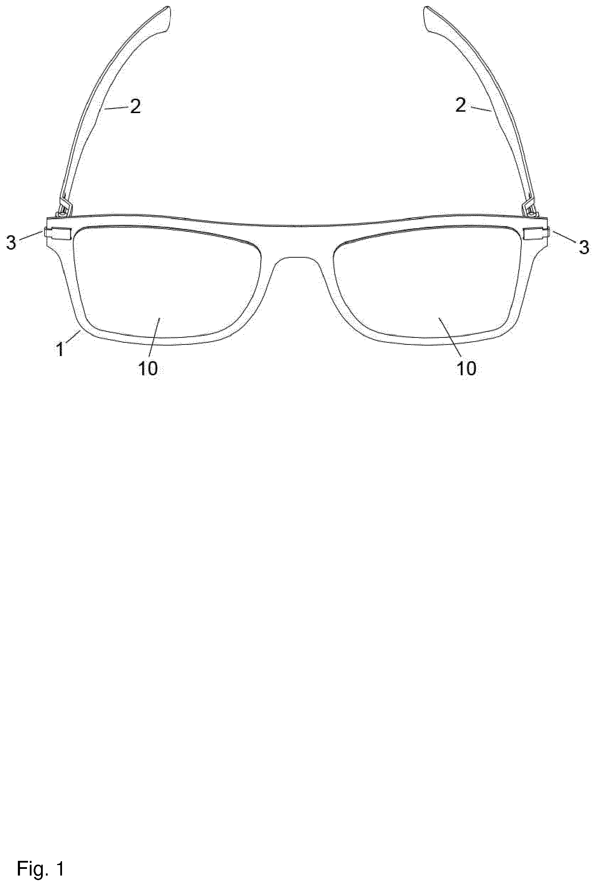

Fig. 1 zeigt eine perspektivische Ansicht eines erfindungsgemäßen Brillengestells mit einer Gläserfassung (1), die mit zwei von jeweils einer Öffnung (10) aufgenommenen Brillengläsern versehen ist, zwei fassungsseitig vorgesehenen Klammer-Scharnierelementen (3), die an den terminalen Enden rechts und links in die Gläserfassung (1) greifen, und zwei austauschbaren Brillenbügeln (2), die in die fassungsseitigen Klammer-Scharnierelemente (3) greifen.

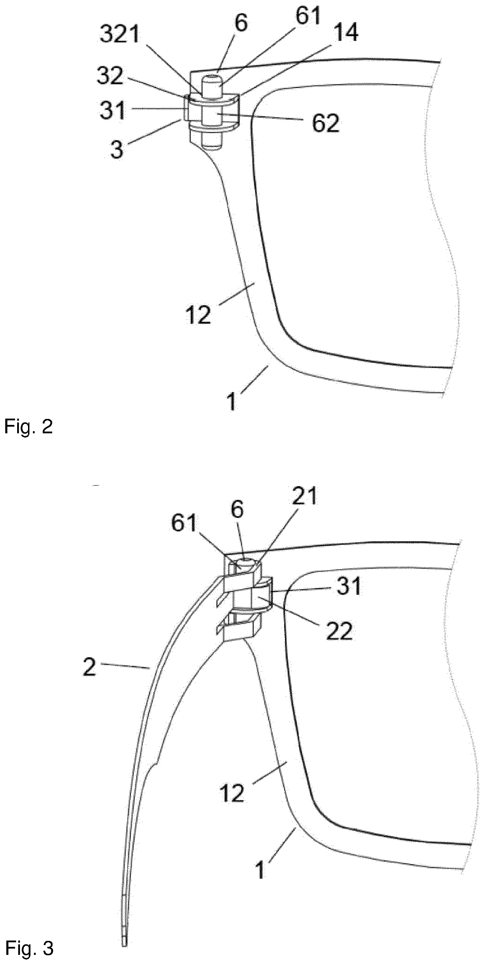

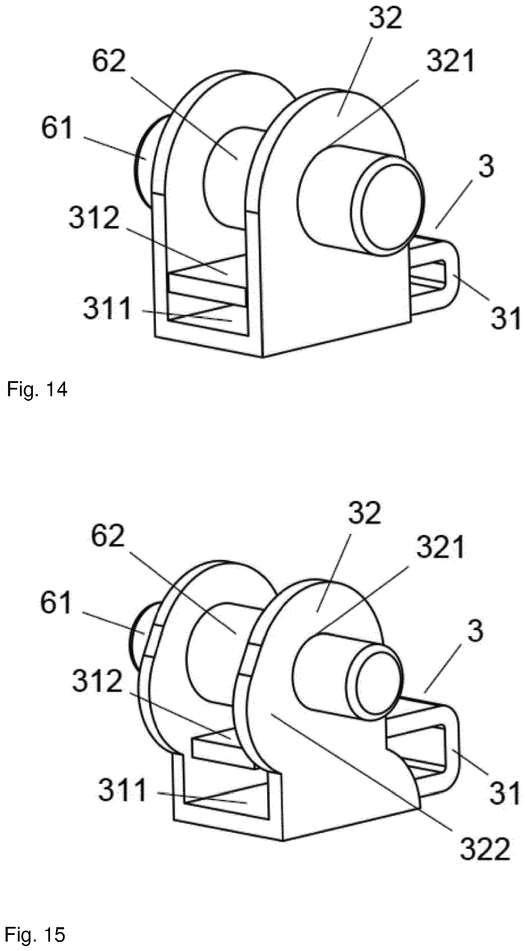

Fig. 2 und Fig. 3 zeigen die Fassungsinnenseite (12) der Gläserfassung (1) mit einem Klammer-Scharnierelement (3), welches eine Befestigungsklammer (31) aufweist, die durch einen an der Fassungsfront (11) anliegenden Schenkel (311) und einen an der Fassungsinnenseite (12) anliegenden Schenkel (312) außenrandseitig in die Gläserfassung (1) greift; und welches überdies zwei angewinkelte Scharnieraugen (32) aufweist, die mit einem Scharnierstift (6) zur Anbindung des Brillenbügels (2) versehen sind, wobei die freien Enden (61) des Scharnierstiftes (6) durchgängig durch jeweils eine als Durchbohrung ausgeführte Aussparung (321) der Scharnieraugen (32) geführt sind; und wobei die Scharnieraugen (32) aus dem an der Fassungsfront (11) anliegenden Schenkel (311) der Befestigungsklammer (31) herausgebildet sind, wobei die Scharnieraugen (32) zungenförmig ausgebildet sind. Analog dazu zeigt Fig. 15 ein erfindungsgemäßes Klammer-Scharnierelement (3) mit angewinkelten Scharnieraugen (32), die jeweils einen vorspringenden Abschnitt (322) aufweisen, der in Längsrichtung der Gläserfassung (1) weist, wobei die Scharnieraugen (32) gemäß der Erfindung jeweils eine Nocke oder aber weitere vorspringende Abschnitte aufweisen können.

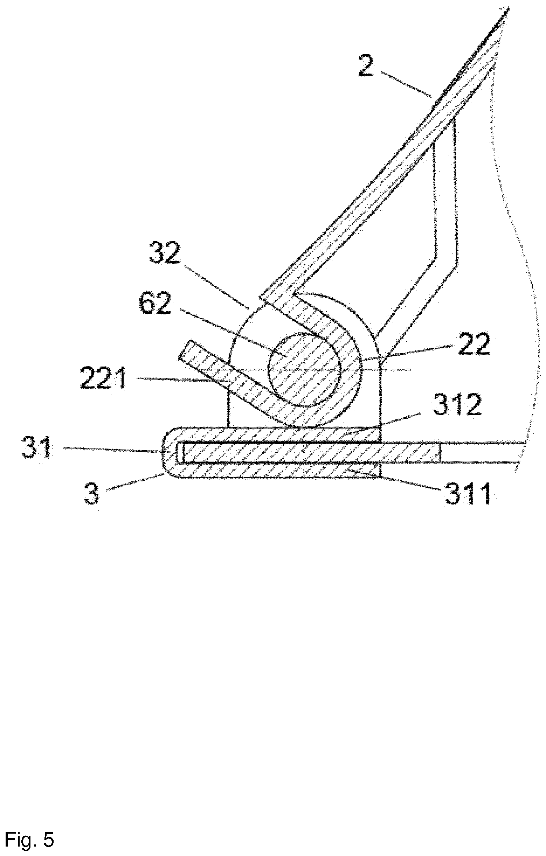

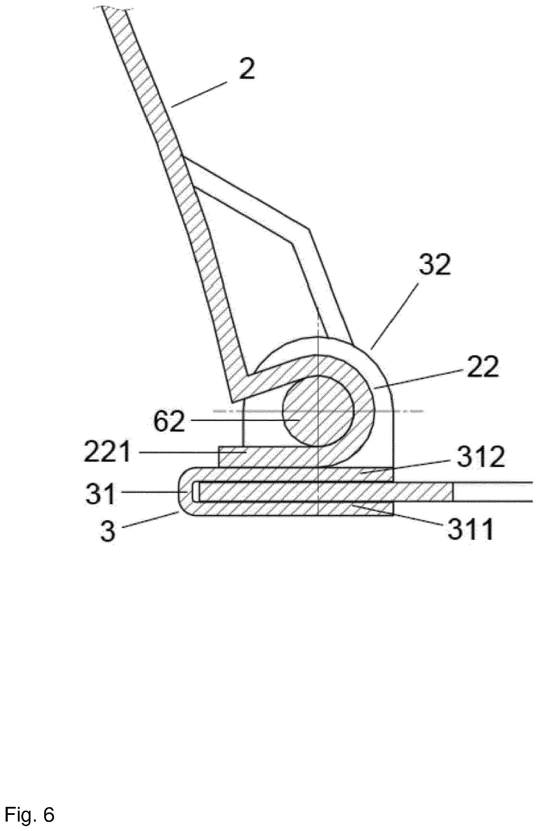

Fig. 3 bis Fig. 8 zeigen das Klammer-Scharnierelement (3) mit einem angebrachten Brillenbügel (2), der fassungsseitig drei in Längsrichtung des Brillenbügels (2) weisende Streifen aufweist, die derart ausgebildet sind, dass die äußeren Streifen an ihrem fassungsseitigen Ende einen U-förmig ausgebildeten Haken (21) aufweisen, während der mittig angeordnete Streifen einen an dem fassungsseitigen Ende des Streifens angewinkelten U-förmig ausgebildeten Bügel (22) aufweist, wobei die an den fassungsseitigen Enden der Streifen ausgebildeten Haken (21) eine in Längsrichtung des Brillenbügels (1) weisende Öffnung (211) aufweisen, durch welche der Scharnierstift (6) in den Haken (21) geführt werden kann, und wobei die Haken (21) durch die U-förmige Ausbildung an den freien Enden (61) anliegend schwenkbar in den Scharnierstift (6) greifen, wobei die Haken (21) durch eine stufenförmige Ausbildung der die Haken (21) aufweisenden Streifen derart zu dem U-förmig ausgebildeten Bügel (22) hin versetzt sind, dass dieser an einem Abschnitt (62) des in den Haken (21) geführten Scharnierstiftes (6) anliegt, derart, dass der Scharnierstift (6) nicht aus der Öffnung (211) der Haken (21) weicht. Der Bügel (22) ist dabei derart ausgebildet, dass der zur Fassungsinnenseite (12) gewandte Abschnitt (221) des Bügels (22) mindestens abschnittsweise flächig an der Befestigungsklammer (31) anliegt. Durch das Eingreifen der Haken (21) in den Scharnierstift (6) der Scharnieraugen (32) und den an dem Schenkel (312) anliegenden Bügel (22) wirken die Brillenbügel (2) und die Klammer-Scharnierelemente (3) derart komplementär, dass ein ungewolltes Öffnen der Befestigungsklammer (31) verhindert wird. Auf diese Weise lassen sich die erfindungsgemäßen Klammer-Scharnierelemente (3) mühelos mit der Gläserfassung (1) verbinden, ohne diese einpressen oder einteilig aus der Gläserfassung herausbilden zu müssen, weitgehend unabhängig von der Art und Beschaffenheit der Gläserfassung (1).

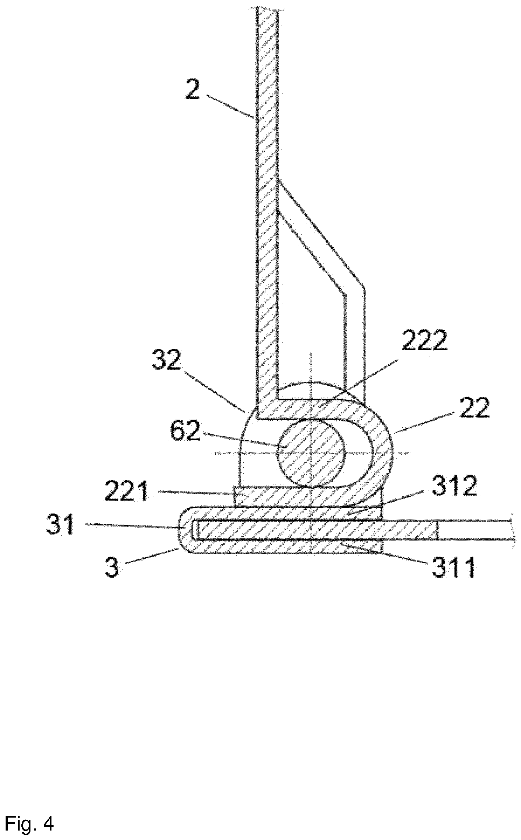

In einer bevorzugten Ausführung ist der Bügel (22) derart ausgebildet, dass der angewinkelt aus dem Streifen hervorgehende Abschnitt (222) und der zur Fassungsinnenseite (12) gewandte Abschnitt (221) des Bügels (22) relativ zu dem Durchmesser des den Bügel (22) führenden Abschnitts (62) des Scharnierstiftes (6) verlängert ausgebildet sind. Fig. 4 bis Fig. 8 zeigen einen derart ausgebildeten Bügel (22), wobei der Bügel (22) beim Ein- / Ausklappen zu dem Scharnierstift (6) weicht, wodurch eine Spannwirkung entsteht, durch welche der Brillenbügel (2) arretiert wird. Der Scharnierstift (6) ist dabei derart in dem Bügel (22) angeordnet, dass der Bügel (22) Raum für das Neigen des den Bügel (22) aufweisenden Streifens bietet.

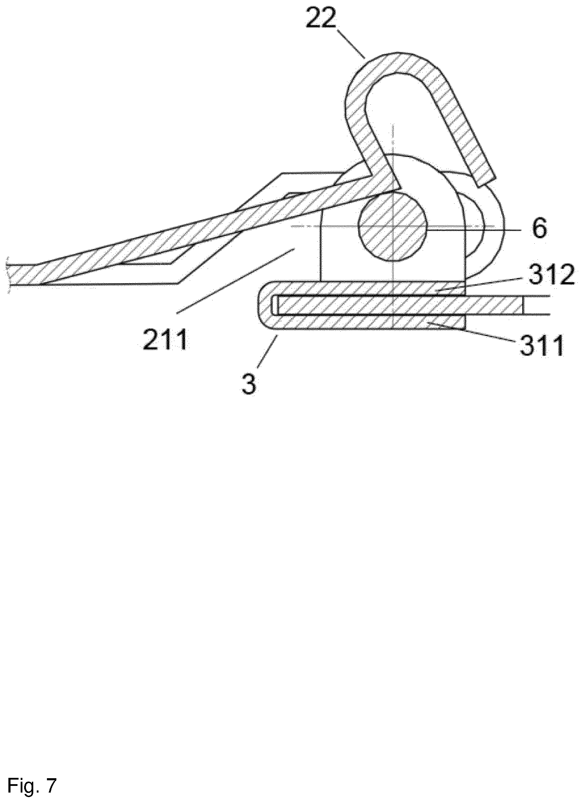

Analog dazu zeigt Fig. 7 den Brillenbügel (2) in einer zum Anbringen / Abnehmen angelegten Position, wobei die Öffnung (211) der Haken (21) derart freigelegt ist, dass der Scharnierstift (6) an dem den Bügel (22) ausbildenden Streifen vorbeigeführt werden kann. Durch die vom Träger abgewandte Ausbildung der Haken (21), lässt sich der Scharnierstift (6) unter leichtem Druck auf den den Bügel (22) aufweisenden Streifen an diesem vorbei in die Haken (21) führen. Analog dazu lässt sich der Brillenbügel (2) anbringen, indem der den Bügel (22) aufweisende Streifen und die die Haken (21) aufweisenden Streifen zwischen Daumen und Zeigefinger gehalten und durch schwaches Einwirken gegeneinander geführt werden, derart, dass die Öffnung (211) freigelegt wird, wobei die den Bügel (22) und die Haken (21) ausbildenden Streifen vorzugsweise federnd aus einem Flachmetall hergestellt sind, um eine Rückkehr des Bügels (22) in die Normalstellung zu ermöglichen.

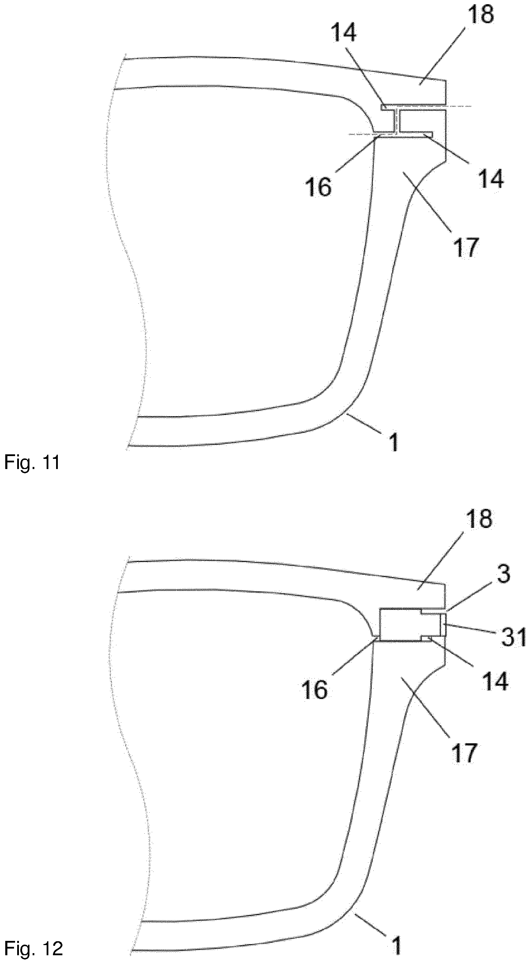

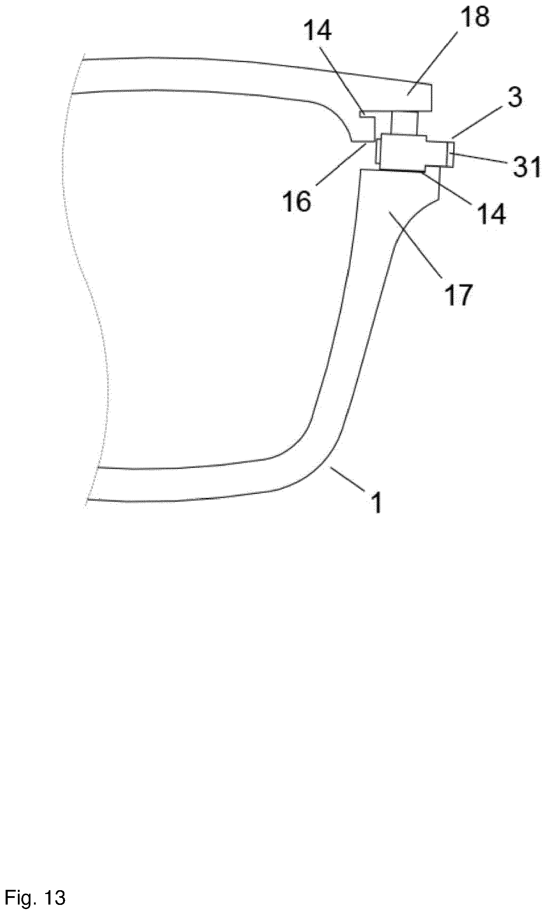

Fig. 11 bis Fig. 13 zeigen die Gläserfassung (1) mit ergänzenden Schlitzen (16), die sich stufenförmig durch die Schlitze (14) verlaufend über die terminalen Enden rechts und links erstrecken, derart, dass jeweils ein Schlitz (14) an einem oberen Rahmenabschnitt (18) angeordnet ist und ein weiterer an einem unteren Rahmenabschnitt (17), wobei die in die Schlitze (14) greifenden Scharnieraugen (32) ein horizontales und vertikales Öffnen der Schlitze (16) verhindern. Die Schlitze (14) sind dabei derart ausgebildet, dass die Schlitze (16) und demgemäß die Gläserfassung (1) durch horizontales Lösen der Scharnieraugen (32) von dem an dem oberen Rahmenabschnitt (18) angeordneten Schlitz (14) geöffnet werden können, ohne indes das Klammer-Scharnierelement (3) von der Gläserfassung (1) trennen zu müssen. Fig. 13 zeigt einen derartig geöffneten Schlitz (16).

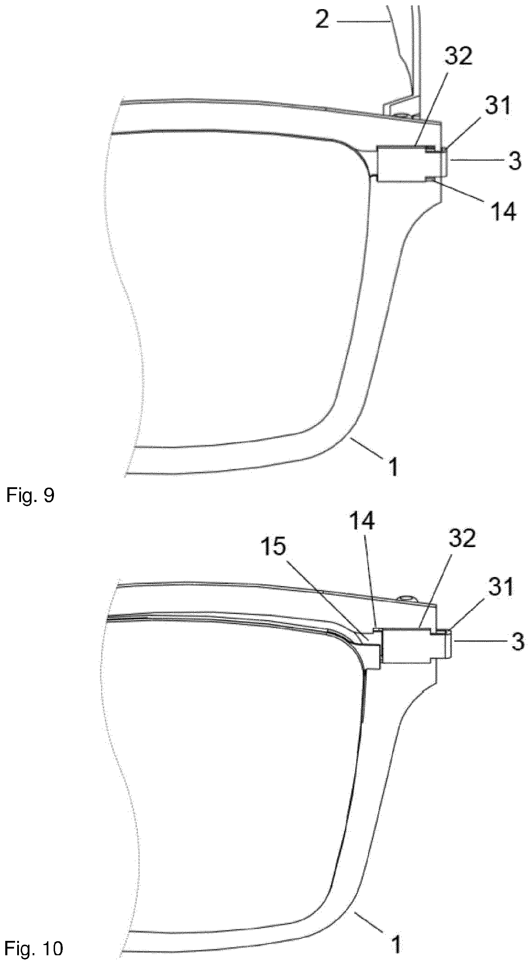

Fig. 9 und Fig. 10 zeigen die Gläserfassung (1) mit einer Aussparung (15), die sich ausgehend von einer Öffnung (10) partiell über das an die Öffnung (10) anschließende terminale Ende der Gläserfassung (1) erstreckt; und darüber hinaus ein eingesetztes Brillenglas welches einen vorspringenden Abschnitt aufweist, welcher von der Aussparung (15) aufgenommen und durch einen anliegenden Schenkel (311) der Befestigungsklammer (31) in der Aussparung (15) gehalten wird, wobei die Schlitze (14) relativ zu den in den Schlitzen (14) geführten Scharnieraugen (32) verlängert ausgebildet sind, derart, dass die Scharnieraugen (32) innerhalb der Schlitze (14) horizontal beweglich sind. Durch Lösen der Befestigungsklammer (31) von dem vorspringenden Abschnitt des Brillenglases lässt sich das Brillenglas mühelos von der Gläserfassung (1) trennen, ohne indes das filigran ausgebildete Klammer-Scharnierelement (3) von der Gläserfassung (1) trennen zu müssen.

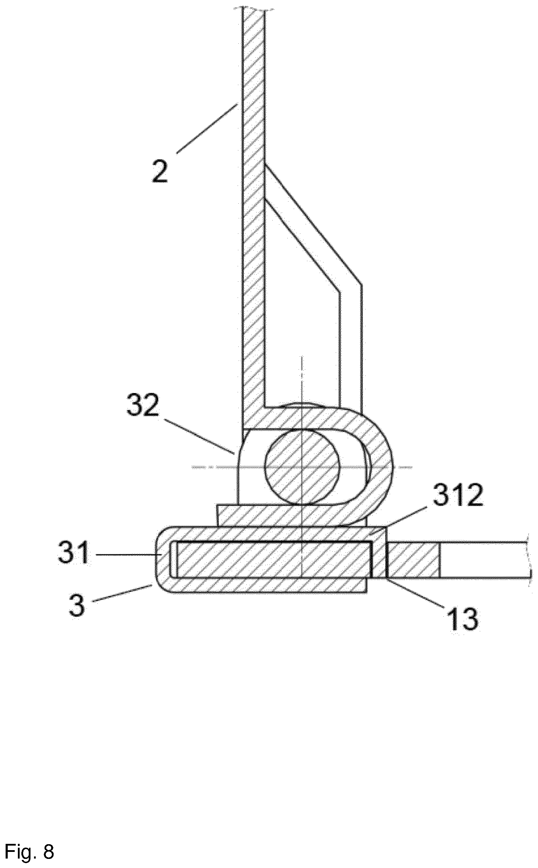

Gemäß der Erfindung ist der an der Fassungsinnenseite (12) anliegende Schenkel (312) der Befestigungsklammer (31) flächig, gekrümmt oder gebogen ausgebildet. Fig. 8 zeigt eine derartig ausgebildete Befestigungsklammer (31), die eine zur Fassungsinnenseite (12) gewandte Biegung aufweist, die in eine Aussparung (13) der Gläserfassung (1) greift und das Klammer-Scharnierelement (3) fixiert.

Fig. 15 zeigt einen Scharnierstift (6), der derart ausgebildet ist, dass der den Bügel (22) führende Abschnitt (62) einen größeren Durchmesser aufweist als die freien Enden (61), wobei die freien Enden (61) und der den Bügel (22) führende Abschnitt (62) jeweils einen runden Querschnitt aufweisen.

Diese und andere Ausführungsformen der vorliegenden Erfindung werden in der Beschreibung und den Figuren offenbart und sind durch diese umfasst. Die in der vorstehenden Beschreibung und in den Ansprüchen genannten Merkmale sind weiterhin in einer beliebigen Auswahl kombinierbar und die im Rahmen der Erfindung sinnvollen Merkmalskombinationen als offenbart zu betrachten. Weitere Literatur über bekannte der Materialien, Verfahren und Anwendungen, die in Übereinstimmung mit der vorliegenden Erfindung verwendet werden können, können aus öffentlichen Bibliotheken und Datenbanken, beispielsweise unter Verwendung elektronischer Geräte, aufgerufen werden. Ein vollständigeres Verständnis der Erfindung kann durch Bezugnahme auf die Figuren und Beispiele erhalten werden, die zum Zweck der Illustration bereitgestellt wurden und den Umfang der Erfindung nicht beschränken sollen.

## Patentansprüche

1. Brillengestell mit einer Gläserfassung (1), die zwei Öffnungen (10) zur Aufnahme von Brillengläsern und jeweils zwei an den terminalen Enden rechts und links untereinander angeordnete Schlitze (14) zur Aufnahme jeweils eines Klammer-Scharnierelements (3) aufweist, und mit zwei von den Schlitzen (14) aufgenommenen Klammer-Scharnierelementen (3), die an den terminalen Enden rechts und links in die Gläserfassung (1) greifen, und zwei austauschbaren Brillenbügeln (2), die schwenkbar in die Klammer-Scharnierelemente (3) rechts und links greifen, **dadurch gekennzeichnet,**
**dass** die Klammer-Scharnierelemente (**3**) jeweils eine U-förmig aus einem Flachmaterial herausgebildete Befestigungsklammer (**31**) und zwei einteilig aus der Befestigungsklammer (**31**) herausgebildete Scharnieraugen (**32**) mit einem von den Scharnieraugen (**32**) aufgenommenen Scharnierstift (**6**) aufweisen, wobei die Scharnieraugen (**32**) jeweils eine zur Aufnahme des Scharnierstiftes (**6**) ausgebildete Aussparung (**321**) aufweisen, und wobei die Scharnieraugen (**32**) einander gegenüberliegend angewinkelt aus einem ersten Schenkel (**311**) der Befestigungsklammer (**31**) herausgebildet sind, wobei die Scharnieraugen (**32**) zu dem gegenüberliegenden Schenkel (**312**) der Befestigungsklammer (**31**) weisen, und wobei die Befestigungsklammer (**31**) mit dem die Scharnieraugen (**32**) aufweisenden Schenkel (**311**) und dem gegenüberliegenden Schenkel (**312**) außenrandseitig an der Fassungsfront (**11**) und der Fassungsinnenseite (**12**) anliegend in die Gläserfassung (**1**) greift, wobei der die Scharnieraugen (**32**) aufweisende Schenkel **(311)** an der Fassungsfront **(11)** anliegt, und wobei die Scharnieraugen **(32)** ausgehend von dem an der Fassungsfront **(11)** anliegenden Schenkel **(311)** der Befestigungsklammer **(31)** durch die Schlitze **(14)** der Gläserfassung **(1)** geführt sind, und
die Brillenbügel **(2)** fassungsseitig jeweils drei in Längsrichtung der Brillenbügel **(2)** weisende Streifen aufweisen, die derart ausgebildet sind, dass der mittig angeordnete Streifen einen an dem fassungsseitigen Ende des Streifens angewinkelten U-förmig ausgebildeten Bügel **(22)** aufweist und die beiden äußeren Streifen jeweils einen an dem fassungsseitigen Ende der Streifen U-förmig ausgebildeten Haken **(21),** wobei sich die an den fassungsseitigen Enden der Streifen ausgebildeten Haken **(21)** in einer angebrachten und geöffneten Position des Brillenbügels **(2)** U-förmig vom Träger weg erstrecken, und wobei die ausgebildeten Haken **(21)** jeweils eine in Längsrichtung des Brillenbügels **(2)** weisende Öffnung **(211)** aufweisen, durch welche der Scharnierstift **(6)** in den Haken **(21)** geführt werden kann, wobei die Brillenbügel **(2)** durch die U-förmige Ausbildung der Haken **(21)** schwenkbar anliegend in den Scharnierstift **(6)** des Klammer-Scharnierelements **(3)** greifen, und wobei die Haken **(21)** durch eine S-förmige oder stufenförmige Ausbildung der die Haken **(21)** ausbildenden Streifen derart zu dem ausgebildeten Bügel **(22)** hin versetzt sind, dass der Bügel **(22)** an einem Abschnitt **(62)** des in den Haken **(21)** geführten Scharnierstiftes **(6)** anliegt, derart, dass der Scharnierstift **(6)** in einer angebrachten Position des Brillenbügels (2) nicht aus der Öffnung **(211)** der Haken **(21)** weicht, wobei der Bügel **(22)** derart ausgebildet ist, dass mindestens ein Abschnitt eines zur Fassungsinnenseite **(12)** gewandten Abschnitts **(221)** des Bügels **(22)** in einer angebrachten und geöffneten Position des Brillenbügels **(2)** flächig an dem an der Fassungsinnenseite **(12)** anliegenden Schenkel **(312)** der Befestigungsklammer **(31)** anliegt, und wobei die den Bügel **(22)** und die Haken **(21)** ausbildenden Streifen aus einem Flachmaterial herausgebildet sind.

2. Brillengestell nach Anspruch 1, **dadurch gekennzeichnet, dass** die den Bügel **(22)** und die Haken **(21)** ausbildenden Streifen der Brillenbügel **(2)** aus einem Flachmetall hergestellt sind, wobei der den Bügel **(22)** ausbildende Streifen und die die Haken **(21)** ausbildenden Streifen federnd ausgebildet sind.

3. Brillengestell nach einem der Ansprüche 1 oder 2, **dadurch gekennzeichnet, dass** die Klammer-Scharnierelemente **(3)** mit der Befestigungsklammer **(31)** und den den Scharnierstift **(6)** aufnehmenden Scharnieraugen **(32)** einteilig aus einem Flachmetall hergestellt sind, wobei die Befestigungsklammer **(31)** federnd ausgebildet ist.

4. Brillengestell nach einem der Ansprüche 1 bis 3, **dadurch gekennzeichnet, dass** der Scharnierstift **(6)** derart ausgebildet ist, dass der den Bügel **(22)** führende Abschnitt **(62)** des Scharnierstiftes **(6)** einen größeren Durchmesser aufweist als die freien Enden **(61),** wobei die freien Enden **(61)** und der den Bügel **(22)** führende Abschnitt **(62)** jeweils einen runden Querschnitt haben.

5. Brillengestell nach einem der Ansprüche 1 bis 4, **dadurch gekennzeichnet, dass** die Klammer-Scharnierelemente **(3)** und der Scharnierstift **(6)** derart ausgebildet sind, dass die freien Enden **(61)** des Scharnierstiftes **(6)** durchgängig durch die Aussparungen **(321)** der Scharnieraugen **(32)** geführt sind, wobei die Aussparungen **(321)** der Scharnieraugen **(32)** ausgeführt sind als Durchbohrung.

6. Brillengestell nach einem der Ansprüche 1 bis 5, **dadurch gekennzeichnet, dass** der Bügel **(22)** derart ausgebildet ist, dass der angewinkelt aus dem Streifen hervorgehende Abschnitt **(222)** und der in einer angebrachten Position des Brillenbügels **(2)** zur Fassungsinnenseite **(12)** gewandte Abschnitt **(221)** relativ zu dem Durchmesser des den Bügel **(22)** führenden Abschnitts **(62)** des Scharnierstiftes **(6)** verlängert ausgebildet sind, derart, dass der U-förmig ausgebildete Bügel **(22)** einen Führungsabschnitt aufweist, innerhalb dessen der Bügel **(22)** beweglich an dem den Bügel **(22)** führenden Abschnitt **(62)** des Scharnierstiftes **(6)** anliegt.

7. Brillengestell nach einem der Ansprüche 1 bis 6, **dadurch gekennzeichnet, dass** die Schlitze **(14)** der Gläserfassung **(1)** relativ zu den in den Schlitzen **(14)** geführten Abschnitten der Scharnieraugen **(32)** verlängert ausgebildet sind, derart, dass die in den Schlitzen **(14)** geführten Scharnieraugen **(32)** innerhalb der Schlitze **(14)** horizontal beweglich sind.

8. Brillengestell nach einem der Ansprüche 1 bis 7, **dadurch gekennzeichnet, dass** der an der fassungsinnenseite **(12)** anliegende Schenkel **(312)** der Befestigungsklammer **(31)** gekrümmt oder gebogen ausgebildet ist.

9. Brillengestell nach einem der Ansprüche 1 bis 8, **dadurch gekennzeichnet, dass** mindestens ein Schenkel **(311; 312)** der Befestigungsklammer **(31)** derart an einem von einer der Öffnung **(10)** aufgenommenen Brillenglas anliegt, dass das Brillenglas nicht aus der Öffnung **(10)** weicht.

10. Brillengestell nach einem der Ansprüche 1 bis 9, **dadurch gekennzeichnet, dass** die Gläserfassung **(1)** an ihren terminalen Enden rechts und links jeweils eine Aussparung **(15)** zur Aufnahme eines vorspringenden Abschnitts eines einen vorspringenden Abschnitt aufweisenden Brillenglases aufweist, wobei sich die Aussparung **(15)** ausgehend von jeweils einer Öffnung **(10)** zur Aufnahme des Brillenglases partiell über das an die Öffnung **(10)** anschließende terminale Ende der Gläserfassung **(1)** erstreckt, und wobei die Aussparung **(15)** derart angeordnet ist, dass mindestens einer der Schenkel **(311; 312)** der Befestigungsklammer **(31)** an dem vorspringenden Abschnitt anliegt, derart, dass dieser nicht aus der Aussparung **(15)** weicht.

11. Brillengestell nach einem der Ansprüche 1 bis 10, **dadurch gekennzeichnet, dass** die Gläserfassung **(1)** an ihren terminalen Enden rechts und links jeweils einen Schlitz **(16)** aufweist, der sich ausgehend von jeweils einer der Öffnungen **(10)** stufenförmig durch die Schlitze **(14)** verlaufend über die terminalen Enden rechts und links erstreckt, derart, dass die Gläserfassung **(1)** an ihren terminalen Enden rechts und links in einen oberen Rahmenabschnitt **(18)** und einen unteren Rahmenabschnitt **(17)** unterteilt ist, an welchen jeweils einer der Schlitze **(14)** zur Aufnahme der Scharnieraugen **(32)** angeordnet ist.

## Claims

1. Spectacle frame with a lens mount (1) comprising two openings (10) for receiving spectacle lenses and two slots (14) each arranged one below the other at the terminal ends on the right and left for receiving one clip hinge element (3) each, and comprising two clip hinge elements (3) received by the slots (14), which engage in the lens mount (1) at the terminal ends on the right and left, and two interchangeable spectacle temples (2) which pivotally engage in the clip hinge elements (3) on the right and left, **characterized in that** the clip hinge elements (3) each include a fastening clip (31) formed in a U-shape out of a flat material and two hinge eyes (32) formed in one piece out of the fastening clip (31), comprising a hinge pin (6) received by the hinge eyes (32), wherein the hinge eyes (32) each include a cutout (321) configured to receive the hinge pin (6), and wherein the mutually opposite hinge eyes (32) are formed at an angle to each other out of a first leg (311) of the fastening clip (31), wherein the hinge eyes (32) point towards the opposite leg (312) of the fastening clip (31), and wherein the fastening clip (31) engages in the lens mount (1) with the leg (311) including the hinge eyes (32) and with the opposite leg (312), which rest against the outer edge of the mount front (11) and the mount inner side (12), wherein the leg (311) including the hinge eyes (32) rests against the mount front (11), and wherein the hinge eyes (32), proceeding from the leg (311) of the fastening clip (31) resting against the mount front (11), are guided through the slots (14) of the lens mount (1), and on the mount side the spectacle temples (2) each include three strips pointing in the longitudinal direction of the spectacle temples (2), which are configured in such a way that the centrally arranged strip has a U-shaped bracket (22) angled at the mount-side end of the strip and the two outer strips each include a hook (21) of U-shaped design at the mount-side end of the strips, wherein in an attached and open position of the spectacle temple (2) the hooks (21) formed at the mount-side ends of the strips extend in a U-shaped manner away from the wearer, and wherein the formed hooks (21) each comprise an opening (211) pointing in the longitudinal direction of the spectacle temple (2), through which the hinge pin (6) can be guided into the hook (21), wherein due to the U-shaped configuration of the hooks (21), the spectacle temples (2) engage in the hinge pin (6) of the clip hinge element (3) in a pivotally abutting manner, and wherein the hooks (21) are offset towards the formed bracket (22) by an S-shaped or step-shaped configuration of the strips forming the hooks (21) in such a way that the bracket (22) rests against a portion (62) of the hinge pin (6) guided into the hook (21) in such a way that in an attached position of the spectacle temple (2) the hinge pin (6) does not move out of the opening (211) of the hooks (21), wherein the bracket (22) is configured in such a way that in an attached and open position of the spectacle temple (2) at least one portion of a portion (221) of the bracket (22) facing the mount inner side (12) flatly rests against the leg (312) of the fastening clip (31) resting against the mount inner side (12), and wherein the strips forming the bracket (22) and the hooks (21) are formed out of a flat material.

2. Spectacle frame according to claim 1, **characterized in that** the strips of the spectacle temples (2) forming the bracket (22) and the hooks (21) are made of a flat metal, wherein the strip forming the bracket (22) and the strips forming the hooks (21) are of resilient design.

3. Spectacle frame according to any of claims 1 or 2, **characterized in that** the clip hinge elements (3) with the fastening clip (31) and the hinge eyes (32) receiving the hinge pin (6) are manufactured in one piece from a flat metal, wherein the fastening clip (31) is of resilient design.

4. Spectacle frame according to any of claims 1 to 3, **characterized in that** the hinge pin (6) is configured in such a way that the portion (62) of the hinge pin (6) guiding the bracket (22) has a larger diameter than the free ends (61), wherein the free ends (61) and the portion (62) guiding the bracket (22) each have a round cross-section.

5. Spectacle frame according to any of claims 1 to 4, **characterized in that** the clip hinge elements (3) and the hinge pin (6) are configured in such a way that the free ends (61) of the hinge pin (6) are continuously guided through the cutouts (321) of the hinge eyes (32), wherein the cutouts (321) of the hinge eyes (32) are designed as a through-bore.

6. Spectacle frame according to any of claims 1 to 5, **characterized in that** the bracket (22) is configured in such a way that the portion (222) emerging from the strip at an angle and the portion (221) facing the mount inner side (12) in an attached position of the spectacle temple (2) are elongated relative to the diameter of the portion (62) of the hinge pin (6) guiding the bracket (22), in such a way that the U-shaped bracket (22) includes a guide portion within which the bracket (22) movably rests against the portion (62) of the hinge pin (6) guiding the bracket (22).

7. Spectacle frame according to any of claims 1 to 6, **characterized in that** the slots (14) of the lens mount (1) are elongated relative to the portions of the hinge eyes (32) guided in the slots (14), in such a way that the hinge eyes (32) guided in the slots (14) are horizontally movable within the slots (14).

8. Spectacle frame according to any of claims 1 to 7, **characterized in that** the leg (312) of the fastening clip (31) resting against the mount inner side (12) is of curved or bent design.

9. Spectacle frame according to any of claims 1 to 8, **characterized in that** at least one leg (311; 312) of the fastening clip (31) rests against a spectacle lens received by one of the openings (10) in such a way that the spectacle lens does not move out of the opening (10).

10. Spectacle frame according to any of the claims 1 to 9, **characterized in that** at its terminal ends on the right and left the lens mount (1) each includes a cutout (15) for receiving a protruding portion of a spectacle lens including a protruding portion, wherein the cutout (15), each proceeding from an opening (10) for receiving the spectacle lens, partially extends over the terminal end of the lens mount (1) adjoining the opening (10), and wherein the cutout (15) is arranged in such a way that at least one of the legs (311; 312) of the fastening clip (31) rests against the protruding portion in such a way that the same does not move out of the cutout (15).

11. Spectacle frame according to any of claims 1 to 10, **characterized in that** at its terminal ends on the right and left the lens mount (1) each includes a slot (16) which, proceeding from one of the openings (10) each, extends in a stepped manner through the slots (14) over the terminal ends on the right and left, in such a way that at its terminal ends on the right and left the lens mount (1) is divided into an upper frame portion (18) and a lower frame portion (17), at each of which one of the slots (14) is arranged for receiving the hinge eyes (32).

## Revendications

1. Monture de lunettes dotée d'une armature **(1)** qui présente deux ouvertures **(10)** destinées à accueillir des verres de lunette, et respectivement deux fentes **(14)** agencées aux extrémités terminales à gauche et à droite en dessous l'une de l'autre, destinées à accueillir chacune un élément de charnière pince **(3),** et dotée de deux éléments de charnière pince **(3)** qui sont logés dans lesdites fentes **(14)** et qui saisissent l'armature **(1)** à droite et à gauche aux extrémités terminales, et de deux branches de lunettes **(2)** interchangeables qui saisissent les éléments de charnière pince **(3)** à droite et à gauche de manière articulable, **caractérisée en ce que** les éléments de charnière pince **(3)** présentent chacun une pince de fixation **(31)** en U réalisée dans un matériau plat, et deux œillets de charnière **(32)** monobloc réalisés à partir de la pince de fixation **(31),** dotés d'une broche de charnière **(6)** logée dans lesdits œillets de charnière **(32),** lesdits œillets de charnière **(32)** présentant chacun une cavité **(321)** réalisée pour accueillir la broche de charnière **(6),** et lesdits œillets de charnière **(32)** étant réalisés en coude en vis-à-vis l'un de l'autre à partir d'une première branche **(311)** de la pince de fixation **(31),** lesdits œillets de charnière **(32)** étant dirigés vers la branche **(312)** de la pince de fixation **(31)** en vis-à-vis, et ladite pince de fixation **(31)** saisissant l'armature **(1)** par la branche **(311)** présentant les œillets de charnière **(32)** et par la branche **(312)** en vis-à-vis **(312),** du côté du bord extérieur en venant s'appuyer à la face **(11)** et à l'intérieur de l'armature **(12),** la branche **(311)** présentant les œillets de charnière **(32)** venant s'appuyer à la face **(11),** et lesdits œillets de charnière **(32)** passant à travers les fentes **(14)** de l'armature **(1)** à partir de la branche **(311),** venant s'appuyer à la face **(11),** de la pince de fixation **(31),** et
les branches de la lunette **(2)** présentant, du côté de l'armature, chacune trois bandes dans le sens de la longueur des branches de lunette **(2),** celles-ci étant réalisées de sorte que la bande agencée au milieu présente un étrier **(22)** en U réalisée en coude à l'extrémité de la bande du côté de l'armature et que les deux bandes extérieures présentent chacune un manchon **(21)** réalisé en U à l'extrémité des bandes du côté de l'armature, les manchons **(21)** réalisés aux extrémités des bandes du côté de l'armature s'étendant, dans une position fixée et ouverte de la branche de lunette **(2),** en U dans le sens opposé au porteur, et les manchons **(21)** réalisés présentant chacun une ouverture **(211)** dirigée dans un sens en longueur de la branche de lunette **(2),** au travers de laquelle la broche de charnière **(6)** peut passer dans le manchon **(21),** les branches de lunettes **(2)** saisissant de manière articulable et en y prenant appui ladite broche de charnière **(6)** de l'élément de charnière pince **(3)** par la forme en U des manchons **(21),** et les manchons **(21)** étant décalés, par une forme en S ou en palier des bandes formant les manchons **(21),** par rapport à la branche **(22)** réalisée, de sorte que ladite branche **(22)** vient prendre appui à un tronçon **(62)** de la broche de charnière **(6)** passant dans le manchon **(21),** de sorte que ladite broche de charnière **(6)** ne sort pas, dans une position fixée de la branche de lunettes **(2),**
de l'ouverture **(211)** des manchons **(21),** la branche **(22)** étant réalisée de telle sorte qu'au moins une partie d'un tronçon **(221)** de la branche **(22)** tournée vers l'intérieur de l'armature **(12)** vient, dans une position fixée et ouverte de la branche de lunette **(2)** s'appuyer de manière plane à la branche **(312)** de la pince de fixation **(31)** appuyée à l'intérieur de l'armature **(12),** et les bandes réalisant la branche **(22)** et les manchons **(21)** étant réalisées dans un matériau plat.

2. Monture de lunettes selon la revendication 1, **caractérisée en ce que** les bandes de la branche de lunette **(2)** formant la branche **(22)** et les manchons **(21)** sont fabriquées dans un métal plat, la bande réalisant la branche **(22)** et les bandes réalisant les manchons **(21)** étant réalisées souples.

3. Monture de lunettes selon l'une quelconque des revendications 1 ou 2, **caractérisée en ce que** les éléments de charnière pince **(3)** sont réalisés en monobloc avec la pince de fixation **(31)** et les œillets de charnière **(32)** accueillant la broche de charnière **(6),** à partir d'un métal plat, ladite pince de fixation **(31)** étant réalisée souple.

4. Monture de lunettes selon l'une quelconque des revendications 1 à 3, **caractérisée en ce que** la broche de charnière **(6)** est réalisée de telle sorte que le tronçon **(62)** de la broche de charnière **(6)** guidant la branche **(22)** présente un diamètre supérieur à celui des extrémités **(61)** libres, lesdites extrémités libres **(61)** et ledit tronçon **(62)** guidant la branche **(22)** ayant chacun une section ronde.

5. Monture de lunettes selon l'une quelconque des revendications 1 à 4, **caractérisée en ce que** les éléments de charnière pince **(3)** et la broche de charnière **(6)** sont réalisés de telle sorte que les extrémités libres **(61)** de la broche de charnière **(6)** sont conduites de manière continue au travers des cavités **(321)** des œillets de charnière **(32),** lesdites cavités **(321)** des œillets de charnière **(32)** étant réalisées en forme de trou perçant.

6. Monture de lunettes selon l'une quelconque des revendications 1 à 5, **caractérisée en ce que** la branche **(22)** est réalisée de sorte que le tronçon **(222)** saillant de manière coudée à l'extérieur de la bande et le tronçon **(221)** tourné, dans une position fixée de la branche de lunette **(2),** vers l'intérieur de l'armature **(12),** sont réalisés prolongés par rapport au diamètre du tronçon **(62)** de la broche de charnière **(6)** guidant la branche **(22),** de sorte que la branche **(22)** réalisée en forme de U présente un tronçon au sein duquel la branche **(22)** est accolée de manière amovible au tronçon **(62)** de la broche de charnière **(6)** guidant la branche **(22).**

7. Monture de lunettes selon l'une quelconque des revendications 1 à 6, **caractérisée en ce que** les fentes **(14)** de l'armature **(1)** sont réalisées prolongées par rapport aux tronçons des œillets de charnière **(32)** passant dans les fentes **(14),** de sorte que les œillets de charnière **(32)** passant dans les fentes **(14)** sont mobiles à l'horizontal au sein des fentes **(14).**

8. Monture de lunettes selon l'une quelconque des revendications 1 à 7, **caractérisée en ce que** la branche **(312)** de la pince de fixation **(31)** venant s'appuyer à l'intérieur de l'armature **(12)** est réalisée incurvée ou courbée.

9. Monture de lunettes selon l'une quelconque des revendications 1 à 8, **caractérisée en ce qu'**au moins une branche **(311, 312)** de la pince de fixation **(31)** vient s'appuyer à un verre de lunettes logé dans l'ouverture **(10)** de sorte que le verre de lunettes ne s'échappe pas de ladite ouverture **(10).**

10. Monture de lunettes selon l'une quelconque des revendications 1 à 9, **caractérisée en ce que** l'armature **(1)** présente en ses extrémités terminales de droite et gauche une cavité **(15)** destinée à loger un tronçon saillant d'un verre de lunettes présentant un tronçon saillant, ladite cavité **(15)** s'étirant à partir de respectivement une ouverture **(10)** destinée à loger ledit verre de lunettes en partie par-dessus l'extrémité terminale de l'armature **(1)** qui suit ladite ouverture **(10),** et ladite cavité **(15)** étant agencée de telle manière qu'au moins une des branches **(311, 312)** de la pince de fixation **(31)** vient s'appuyer au tronçon saillant, de sorte que celui-ci ne peut pas s'échapper de la cavité **(15).**

11. Monture de lunettes selon l'une quelconque des revendications 1 à 10, **caractérisée en ce que** l'armature **(1)** présente en ses extrémités terminales de gauche et droite respectivement une fente **(16)** qui s'étire, à partir de respectivement une des ouvertures **(10),** par palier au travers des fentes **(14)** en passant par les extrémités terminales à droite et à gauche, de sorte que l'armature **(1)** est divisée, en ses extrémités terminales de droite et gauche, en une partie d'armature supérieure **(18)** et une partie d'armature inférieure **(17)** sur lesquelles sont agencées respectivement une des fentes **(14)** destinées à loger les œillets de charnière **(32).**
